(19) Europäisches Patentamt
European Patent Office
Office européen des brevets

(11) EP 0 967 231 A1

(12) EUROPEAN PATENT APPLICATION

(43) Date of publication:
29.12.1999 Bulletin 1999/52

(51) Int. Cl.$^6$: **C08F 4/68**, C08F 210/16

(21) Application number: 99111412.5

(22) Date of filing: 11.06.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 24.06.1998 CA 2241486

(71) Applicant: **Bayer Inc.**
**Sarnia, ON N7T 7M2 (CA)**

(72) Inventors:
- **Zahalka, Hayder A.**
  **Sarnia, Ontario N7S 4Y8 (CA)**
- **Padliya, Dilipkumar**
  **Sarnia, Ontario N7S 4W6 (CA)**

(74) Representative:
**Feldhues, Michael L.F., Dr. et al**
**Bayer Aktiengesellschaft,**
**Konzernbereich RP,**
**Patente und Lizenzen**
**51368 Leverkusen (DE)**

# (54) Process for the production of olefin polymer with long chain branching

(57) A process for production of an olefin polymer having long chain branching is described. The process comprises the step of polymerizing an olefin monomer in the presence of a catalyst system comprising: a catalyst comprising a compound containing vanadium with the proviso that the compound does not comprise a halogen directly bound to the vanadium;

an organoaluminum cocatalyst having a halogen to aluminum molar ratio in the range of from about 1 to about 2; and
an activator having Formula I:

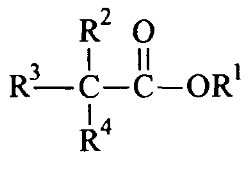
(I)

wherein:

$R^1$ is selected from the group comprising a substituted or unsubstituted $C_1$-$C_{10}$ alkyl, a substituted or unsubstituted $C_5$-$C_{20}$ aryl group and a substituted or unsubstituted $C_3$-$C_{20}$ cycloalkyl group, with the proviso that the moiety -C(O)OR$^1$ may be substituted by a member selected from the group comprising a carbonic acid derivative, a keto group and a nitrile group;
$R^2$, $R^3$ and $R^4$ may be the same or different and each is selected from one of the following groups: (a) $R^1$; (b) a halogen; and (c) hydrogen, a substituted or unsubstituted $C_1$-$C_{10}$ alkyl, a substituted or unsubstituted $C_5$-$C_{20}$ aryl group, a substituted or unsubstituted $C_1$-$C_{10}$ alkyl oxy group, a substituted or unsubstituted $C_5$-$C_{20}$ aryl oxy group or C(O)OR$^7$, wherein $R^7$ is a $C_1$-$C_{20}$ hydrocarbon group;
with the provisos that:

(i) at least one of $R^2$, $R^3$ and $R^4$ is selected from group (b); and
(ii) in the activator of Formula I, all of the following are not satisfied:

$R^1$ is a $C_1$-$C_6$ alkyl group, $R^2$ is a $C_1$-$C_6$ alkyl group or $C_1$-$C_6$ alkoxy group, $R^3$ is chlorine, bromine or hydrogen, and $R^4$ chlorine or bromine.

EP 0 967 231 A1

Printed by Xerox (UK) Business Services
2.16.7/3.6

(Cont. next page)

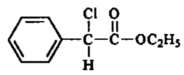
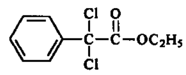
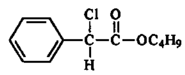
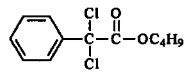
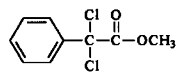
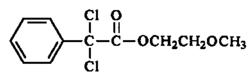
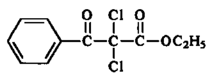
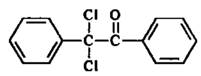
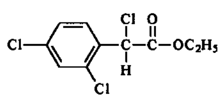
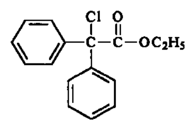
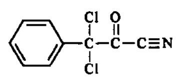
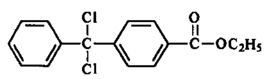

FIGURE 5

## Description

TECHNICAL FIELD

The present invention relates to an olefin polymerization catalyst and to a process for olefin polymerization.

BACKGROUND ART

The polymerization of olefins is well known in the art. It is known to produce both crystalline and amorphous polyolefins via the so-called Ziegler-Natta polymerization process.

Generally, the polymerization reaction is catalyzed through the use of a transition metal catalyst compound and a cocatalyst compound. More specifically, it is conventional to produce EPDM (ethylene-propylene-diene-methylene) terpolymers and EPM (ethylene-propylene-methylene) copolymers in solution or slurry processes using Ziegler-Natta catalysts such as $VOCl_3$, $V(acac)_3$ (acac=acetylacetonate) and $VCl_4$, in combination with an aluminum-based cocatalyst such as diethyl aluminochloride (DEAC) and/or ethyl aluminum sesquichloride (EASC) and/or ethyl aluminum dichloride (EADC).

Since EPM copolymers typically have low crystallinity, they are highly soluble in saturated hydrocarbon solutions. For this reason, most of the processes used to produce EPDM terpolymers are solution-based. In these processes, as long as the solution viscosity is kept low, very homogenous polymerization conditions can be maintained. At high solution viscosities, mixing becomes difficult and mass transfer limitations occur resulting in the presence of concentration gradients.

Another known process is based on suspension technology in which the EPDM terpolymer is precipitated in situ as discrete particles in a non-reacting diluent. The fluid phase viscosity remains low, enabling good mixing.

The majority of the current EPDM terpolymer production processes employ soluble Ziegler-Natta catalysts for the production of high molecular weight elastomers. These soluble catalysts are typically formed from vanadium compounds in the oxidation state +3 to +5. Examples of such compounds include vanadium trisacetylacetonate ($V(acac)_3$), vanadium tetrachloride $(VCl)_4$ and vanadium oxytrichloride ($VOCl_3$). These catalysts are used in conjunction with organoaluminum cocatalyst compound such as triethyl aluminum, DEAC or EASC.

The acidic catalyst system $VOCl_3$ and EASC (G. Ver Strate in Ethylene-Propylene Elastomers, *Ency. Poly. Sci. and Eng.*, 2nd Ed., Vol. 6, p522 (1986)) is the catalyst of choice for most of the EPDM elastomers produced by solution polymerization. Ethylidene norbornene (ENB) is the common diene used in the commercial production of EPDM elastomers. ENB-based EPDM elastomers produced under solution conditions in the presence of the acidic catalyst system $VOCl_3$ and EASC are branched though cationic coupling of the ENB pendent double bond. It has been reported by Ver Strate et al. (Ver Strate, Kresge, and Cozewith, ACS Rubber Division Meeting, Detroit, Michigan, May 1 (1973), Paper # 7) that the above combination of catalyst-cocatalyst (i.e., $VOCl_3$/EASC) produce an EPDM elasotmer having unimodal molecular weight distribution. However, the use of a less acidic cocatalyst, such as DEAC, resulted in production of a polymer which exibits multimodal molecular weight distribution - this is disadvantageous.

It is also known to conduct solution polymerization using a catalyst system consisting of $VOCl_3$ as catalyst and EASC as cocatalyst. Further, it is known to conduct suspension polymerization processes by employing a catalyst system consisting of $V(acac)_3$ and DEAC. It is further known that the $VOCl_3$/EASC catalyst/cocatalyst system is more acidic than the $V(acac)_3$/DEAC catalyst/cocatalyst system. It has also been described that the degree of long chain branching is affected by the acidity of the cocatalyst in the $VOCl_3$ catalyst system. That is, an increase in the cocatalyst acidity increases long chain branching in the EPDM terpolymer - see E. N Kresge, C. Cozewith and G. Ver Strate, ACS Rubber Division Meeting, Indiana, May 8, 1984; and E.K. Easterbrook and E. K. Kontos, Polymer and Fiber Science, VCH Publishers, N. Y., Chapter 27 (1992). In suspension polymerization where $V(acac)_3$ is the catalyst and DEAC the cocatalyst, the degree of long chain branching of the EPDM polymer is low.

It is known that the presence of long chain branching in EPDM polymers at various levels improves their cold flow and processing characteristics (E.N. Kresge, C. Cozewith and G. Ver Strate, ACS Rubber Division Meeting, Indiana, May 8, 1984; and K. P. Beardsley and R. W Tomlinson, ACS Rubber Division Meeting, Detroit, Michigan, October 17, 1989). Thus, control of the degree of long chain branching is desirable for tailoring the properties of the resultant polymer to specific applications.

In published European patent application 0,751,155A (Enichem), a process for preparing ethylene-propylene copolymers in suspension is disclosed. The catalyst system employed requires a catalyst containing vanadium in +3 or +5 oxidation state. The vanadium catalyst is premixed in a hydrocarbon solvent with a cocatalyst having the formula $R_nAlX_m$, wherein R is $C_1$-$C_{20}$ alkyl radical, X is halogen, m+n is 3 and n is an integer from 0 to 2. This reference recognizes DEAC as a cocatalyst but does not teach, suggest or recognize the benefits of EASC as a cocatalyst. Further, the process taught by this reference comprises the use of an Al/V molar ratio of between 1 and 20, and preferably between 3 and 5.

Despite the foregoing advances in the prior art, there is still room for improvement. Specificially, it would be desirable to have an improved catalyst system which could be advantageously used to produce a polymer, such as an EPDM terpolymer, having a desirable combination of high long chain branching and improved catalyst activity/efficiency.

## DISCLOSURE OF THE INVENTION

It is an object of the present invention to provide a novel process for production of an olefin polymer which obviates or mitigates at least one of the above-identified disadvantages of the prior art.

It is another object of the present invention to provide a novel olefin monomer polymerization catalyst system which obviates or mitigates at least one of the above-identified disadvantages of the prior art.

Accordingly, in one of its aspects, the present invention provides a process for production of an olefin polymer having long chain branching, the process comprising the step of polymerizing an olefin monomer in the presence of a catalyst system comprising:

a catalyst comprising a compound containing vanadium with the proviso that the compound does not comprise a halogen directly bound to the vanadium;
an organoaluminum cocatalyst having a halogen to aluminum molar ratio in the range of from about 1 to about 2; and
an activator having Formula I:

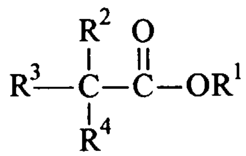

(I)

wherein:

$R^1$ is selected from the group comprising a substituted or unsubstituted $C_1$-$C_{10}$ alkyl, a substituted or unsubstituted $C_5$-$C_{20}$ aryl group and a substituted or unsubstituted $C_3$-$C_{20}$ cycloalkyl group, with the proviso that the moiety -C(O)O$R^1$ may be substituted by a member selected from the group comprising a carbonic acid derivative, a keto group and a nitrile group;
$R^2$, $R^3$ and $R^4$ may be the same or different and each is selected from one of the following groups: (a) $R^1$; (b) a halogen; and (c) hydrogen, a substituted or unsubstituted $C_1$-$C_{10}$ alkyl, a substituted or unsubstituted $C_5$-$C_{20}$ aryl group, a substituted or unsubstituted $C_1$-$C_{10}$ alkyl oxy group, a substituted or unsubstituted $C_5$-$C_{20}$ aryl oxy group or C(O)O$R^7$, wherein $R^7$ is a $C_1$-$C_{20}$ hydrocarbon group;
with the provisos that:

(i) at least one of $R^2$, $R^3$ and $R^4$ is selected from group (b); and
(ii) in the activator of Formula I, all of the following are not satisfied:

$R^1$ is a $C_1$-$C_6$ alkyl group, $R^2$ is a $C_1$-$C_6$ alkyl group or $C_1$-$C_6$ alkoxy group, $R^3$ is chlorine, bromine or hydrogen, and $R^4$ chlorine or bromine.

In another of its aspects, the present invention provides an olefin monomer polymerization catalyst system, the system comprising:

a catalyst comprising a compound containing vanadium with the proviso that the compound does not comprise a halogen directly bound to the vanadium;
an organoaluminum cocatalyst having a halogen to aluminum molar ratio in the range of from about 1 to about 2; and
an activator having Formula I:

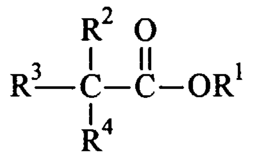

(I)

wherein:

$R^1$ is selected from the group comprising a substituted or unsubstituted $C_1$-$C_{10}$ alkyl, a substituted or unsubstituted $C_5$-$C_{20}$ aryl group and a substituted or unsubstituted $C_3$-$C_{20}$ cycloalkyl group, with the proviso that the moiety -C(O)OR$^1$ may be substituted by a member selected from the group comprising a carbonic acid derivative, a keto group and a nitrile group;
$R^2$, $R^3$ and $R^4$ may be the same or different and each is selected from one of the following groups: (a) $R^1$; (b) a halogen; and (c) hydrogen, a substituted or unsubstituted $C_1$-$C_{10}$ alkyl, a substituted or unsubstituted $C_5$-$C_{20}$ aryl group, a substituted or unsubstituted $C_1$-$C_{10}$ alkyl oxy group, a substituted or unsubstituted $C_5$-$C_{20}$ aryl oxy group or C(O)OR$^7$, wherein $R^7$ is a $C_1$-$C_{20}$ hydrocarbon group;
with the provisos that:

(i) at least one of $R^2$, $R^3$ and $R^4$ is selected from group (b); and
(ii) in the activator of Formula I, all of the following are not satisfied:

$R^1$ is a $C_1$-$C_6$ alkyl group, $R^2$ is a $C_1$-$C_6$ alkyl group or $C_1$-$C_6$ alkoxy group, $R^3$ is chlorine, bromine or hydrogen, and $R^4$ chlorine or bromine.

It has now been found that olefin polymers, such as EPDM terpolymers, with enhanced long chain branching can be obtained by carrying out the polymerization in the presence of a catalyst system comprising a catalyst compound containing vanadium which does not have a halogen directly bound to the vanadium, preferably a catalyst compound containing vanadium in an oxidation state of +3, more preferably vanadium acetylacetonate (V(acac)$_3$) or tris(2-acetylcyclohexanone) vanadium, and an organoaluminum cocatalyst, such as ethylaluminum sesquichloride (EASC) wherein the halogen (preferably chlorine) to aluminum molar ratio is in the range of from about 1 to about 2. It has further been found that EASC and DEAC together may be used as a cocatalyst.
It has also been found, surprisingly, that certain halogenated esters, such as dichlorophenyl acetic acid ethyl ester (DCPEE) may be used as an activator for the catalyst system with resultant high vanadium efficiency and desirable levels of long chain branching of the product polymer (e.g., the EPDM terpolymer). Viscoelastic property measurements illustrate that the elastomers prepared in the presence of EASC exhibit slower relaxation than those prepared with DEAC, indicating a higher degree of long chain branching with EASC.

## BRIEF DESCRIPTION OF THE DRAWINGS

Embodiments of the present invention will be described with reference to the accompanying drawings, in which:

Figure 1 illustrates a tan $\delta$ curve for each of the polymers produced in Examples 1 and 4;
Figure 2 illustrates a tan $\delta$ curve for each of the polymers produced in Examples 5 and 7;
Figure 3 illustrates a DSR stress relaxation curve for each of the polymers produced in Examples 1 and 4;
Figure 4 illustrates a DSR stress relaxation curve for each of the polymers produced in Examples 5 and 7; and
Figure 5 illustrates preferred examples of activators useful in the present invention.

## BEST MODE FOR CARRYING OUT THE INVENTION

Thus, the present catalyst system comprises: a vanadium catalyst, an aluminum cocatalyst and an activator.
The catalyst comprises a compound containing vanadium wherein a halogen (typically chlorine) is not directly bound to the vanadium. Preferably, the catalyst is a compound comprising vanadium in a +3 oxidation state. Non-limiting examples of a useful compound may be selected from the group comprising vanadium triacetylacetonate, vanadylacetylacetonate, vanadium oxobutoxide, trialkylvanadanes, alkoxyoxovanadium-beta-diketonates, tris(2-acetylcyclohexanone) vanadium and mixtures thereof. These compounds are within the purview of a person of ordinary skill in the art. The preferred catalyst for use herein is vanadium triacetylacetonate.

The second component of the present catalyst system is an aluminum cocatalyst. The use of aluminum cocatalysts in Ziegler-Natta polymerization process is conventional and the choice of aluminum cocatalyst to be used in the present catalyst system is within the purview of a person skilled in the art. Preferably, the aluminum cocatalyst comprises at least one compound having the formula:

$$(R^5)_pAlY_q$$

wherein $R^5$ is selected from the group comprising a $C_2$-$C_{10}$ alkyl group, a $C_2$-$C_{10}$ alkoxyl group and a $C_3$-$C_{20}$ cycloalkyl group, Y is a halogen and p+q is 3. Preferably, the aluminum cocatalyst comprises a mixture of at least two of said compounds.

Preferably, p is a number in the range of from about 1 to about 2, and q is a number in the range of from about 1 to about 2. In a more preferred embodiment, p is 2 and q is 1. In another more preferred embodiment, p and q are 1.5. In yet another more preferred embodiment, p is 1 and q is 2.

Preferably, $R^5$ is selected from ethyl and octyl.

Of course, the halogen Y in the preferred formula for the aluminum cocatalyst may be selected from the group comprising fluorine, bromine, chlorine, iodine and astatine. The preferred halogen moiety is chlorine. If two or more halogen moieties are present on the aluminum cocatalyst, it is preferred that they be the same.

Non-limiting examples of aluminum cocatalysts useful in the present invention may be selected from the group comprising trimethylaluminum, triethylaluminum, diethyl aluminum hydride, triisobutyl aluminum, tridecyl aluminum, tridodecyl aluminum, diethyl aluminum methoxide, diethyl aluminum ethoxide, diethyl aluminum phenoxide, diethyl aluminum chloride, ethyl aluminum dichloride, ethyl aluminum sesquichloride, methyl diethoxy aluminum, methyl aluminoxane and mixtures thereof. As is known to those of skill in the art, if it is desired to utilize ethyl aluminum sesquichloride as the aluminum cocatalyst, it is possible to produce the cocatalyst by mixing equimolar amounts of diethyl aluminum chloride and ethyl aluminum dichloride.

In a preferred embodiment of the invention, it is preferred to utilize a two component aluminum cocatalyst: diethyl aluminum chloride and ethyl aluminum sesquichloride.

The third component of the present catalyst system is an activator having Formula I:

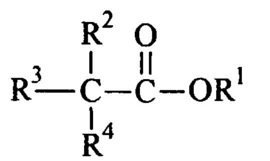

(I)

wherein:

$R^1$ is selected from the group comprising a substituted or unsubstituted $C_1$-$C_{10}$ alkyl, a substituted or unsubstituted $C_5$-$C_{20}$ aryl group and a substituted or unsubstituted $C_3$-$C_{20}$ cycloalkyl group, with the proviso that the moiety -C(O)$OR^1$ may be substituted by a member selected from the group comprising a carbonic acid derivative, a keto group and a nitrile group;

$R^2$, $R^3$ and $R^4$ may be the same or different and each is selected from one of the following groups: (a) $R^1$; (b) a halogen; and (c) hydrogen, a substituted or unsubstituted $C_1$-$C_{10}$ alkyl, a substituted or unsubstituted $C_5$-$C_{20}$ aryl group, a substituted or unsubstituted $C_1$-$C_{10}$ alkyl oxy group, a substituted or unsubstituted $C_5$-$C_{20}$ aryl oxy group or C(O)$OR^7$, wherein $R^7$ is a $C_1$-$C_{20}$ hydrocarbon group (e.g., alkyl, aryl, aralkyl, alkenyl, aryl and the like);

with the provisos that:

(i) at least one of $R^2$, $R^3$ and $R^4$ is selected from group (b); and

(ii) in the activator of Formula I, all of the following are not satisfied:

$R^1$ is a $C_1$-$C_6$ alkyl group, $R^2$ is a $C_1$-$C_6$ alkyl group or $C_1$-$C_6$ alkoxy group, $R^3$ is chlorine, bromine or hydrogen, and $R^4$ chlorine or bromine.

The term "substituted", when used in the context of defining the moieties $R^1$, $R^2$, $R^3$ and $R^4$, is intended to have a broad meaning and encompasses halogen (e.g., chlorine, bromine and the like) and $C_1$-$C_{20}$ hydrocarbon moieties such as alkyl, aryl, aralkyl, alkenyl, aryl and the like.

In $R^1$, non-limiting examples of the carbonic acid derivative may be selected from the group comprising amide, acyl halide and acid anhydride. The preferred moiety for $R^1$ may be selected from the group comprising methyl, ethyl and octyl.

With reference to the moieties $R^2$, $R^3$ and $R^4$, preferred embodiments may be selected from the following groups:

(a) each of $R^2$, $R^3$ and $R^4$ is a halogen, more preferably chlorine;
(b) each of $R^2$ and $R^3$ is a halogen, more preferably chlorine, and $R^4$ is a substituted or unsubstituted $C_5$-$C_{20}$ aryl group, more preferably a substituted or unsubstituted phenyl group;
(c) each of $R^2$ and $R^3$ is a halogen, more preferably chlorine, and $R^4$ is $C(O)OR^7$, wherein $R^7$ is selected from the group comprising methyl, ethyl, propyl, butyl and pentyl, preferably ethyl;
(d) each of $R^2$ and $R^3$ is a substituted or unsubstituted $C_5$-$C_{20}$ aryl group, more preferably a substituted or unsubstituted phenyl group, and $R^4$ is a halogen, more preferably chlorine; and
(e) $R^2$ is $C(O)OR^7$, wherein $R^7$ is selected from the group comprising methyl, ethyl, propyl, butyl and pentyl, preferably ethyl, or $R^2$ is a substituted or unsubstituted $C_5$-$C_{20}$ aryl group, more preferably a substituted or unsubstituted phenyl group, $R^3$ is a halogen, more preferably chlorine, and $R^4$ is hydrogen.

Of these embodiments, it is preferred to select moieties $R^2$, $R^3$ and $R^4$ from either of groups (b) or (e).

Non-limiting examples of activators suitable for use in the present process are illustrated in Figure 5.

The most preferred activator for use in the present process is dichlorophenyl acetic acid ethyl ester (DCPEE).

Preferably, the chlorine to aluminum molar ratio in the aluminum cocatalyst is in the range of from about 1.2 to about 1.5, more preferably from about 1.25 to about 1.5

Preferably, each of the catalyst and the activator are used in an amount to provide and activator to vanadium molar ratio in the range of from about 0.5:1 to about 100:1, more preferably from about 2:1 to about 10:1.

The present catalyst system may be used to produce an olefin polymer. As used through this specification, the term "olefin polymer" is intended to have a broad meaning an encompasses homopolymers, copolymers, terpolymers, etc. which are derived from the polymerization of at least one olefin monomer. As used throughout this specification, the term "olefin monomer" is intended to have a broad meaning and encompasses α-olefin monomers, diolefin monomers and monomers containing at least one internal olefin linkage.

In one preferred embodiment, the olefin monomer is ethylene.

In another preferred embodiment, the olefin monomer is an α-olefin monomer. α-Olefin monomers are well known in the art and the choice thereof for use in the present process is within the purview of a person skilled in the art. Preferably, the α-olefin monomer is selected from the group propylene, butene-1, isobutene, pentene-1, hexene-1, octene-1, branched isomers thereof, styrene, α-methylstyrene and mixtures thereof. The most preferred α-olefin monomer is propylene.

In yet another preferred embodiment, the olefin monomer comprises a nonconjugated diolefin monomer. Diolefin monomers are well known in the art and the choice thereof for use in the present process is within the purview of a person skilled in the art. The nonconjugated diolefin can be straight chain, branched chain or cyclic hydrocarbon diolefins having from 6 to 15 carbon atoms. Illustrative nonlimiting examples are straight chain acyclic diolefins such as 1,4-hexadiene and 1,6-octadiene, the branched chain acyclic diolefins such as 5-methylhexadiene-1,4, 7-methyl-octadiene-1,6 and 7-methyl-octadiene-1,7; single ring alicyclic diolefins such as 1,4-cyclohexadiene and 1,5-cyclooctadiene, and multi ring alicyclic fused and bridged ring dioolefins such as tetrahydroindene, dicyclopentadiene, 5-ethylidene-2-norbornene, 5-vinylidene-2-norbornene and 5-isopropylidene-2-norbornene. 1,4-Hexadiene, 7-methyl-1,6-octadiene, dicyclopentadiene and 5-ethylidene-2-norbornene are the preferred nonconjugated diolefins and 5-ethylidene-2-norbornene is the most preferred nonconjugated diolefin.

Of course it is possible, and preferred, to utilize mixtures of the various types of olefin monomers described hereinabove.

In one preferred embodiment, the olefin monomer is a mixture of ethylene and at least one α-olefin (as described hereinabove) which results in the production of a copolymer. The preferred such monomer mixture comprises ethylene and propylene. In this embodiment, it is preferred to utilize a mixture which results in an elastomer containing from about 30 to about 75, more preferably from about 35 to about 65, weight percent ethylene and from about 25 to about 70, more preferably from about 35 to about 65, weight percent α-olefin

In another preferred embodiment, the olefin is a mixture of ethylene, at least one α-olefin (as described hereinabove) and at least one diolefin monomer (as described hereinabove) which results in the production of a terpolymer. The preferred such monomer mixture comprises ethylene, propylene and 5-ethylidene-2-norbornene. In this embodiment, it is preferred to incorporate into the preferred mixture of ethylene and α-olefin the diolefin monomer in an amount such that the elastomer product contains from about 0.5 to about 15, more preferably from about 1 to about 10, weight percent of the diolefin monomer.

Optionally the present process may be conducted in the presence of a polymer molecular weight regulator. Non-limiting examples of suitable polymer molecular weight regulators include hydrogen and compounds having the formula

$$M(R^6)_n$$

wherein M is a metal selected from Group 2 and Group 12 of the Periodic Table, $R^6$ is a $C_1$-$C_{12}$ alkyl group and n is a number equal to the valence of M.

Preferably, $R^6$ is selected from the group comprising methyl, ethyl, *n*-propyl, isopropyl, *n*-butyl, *t*-butyl, *n*-hexyl, *n*-octyl, *n*-decyl and the like. More preferably, $R^6$ is a $C_1$-$C_6$ alkyl group. Most preferably, $R^6$ is an ethyl group.

Preferably, M is selected from the group comprising beryllium, magnesium, calcium, strontium, barium, zinc, cadmium and mercury. Most preferably, M is zinc.

The most preferred molecular weight regulator (if present) for use in the present catalyst system may be selected from hydrogen and diethyl zinc.

The molecular weight regulator (if present) may be used in a conventional amount and in a conventional manner

Polymerization of the olefin monomer(s) using the present catalyst system may be carried out in a polymerization medium containing an inert hydrocarbon which is a solvent at least for the olefin monomer and the catalyst system. When the polymerization process is slurry polymerization, one of the reactants (e.g., the $\alpha$-olefin, if used) may be used as the polymerization diluent or a hydrocarbon in which the product polymer is insoluble may be used as the diluent. Polymerization of the olefin monomer(s) may be carried out batchwise or in a continuous manner. The preferred process involves continuous slurry polymerization in which ethylene, $\alpha$-olefin monomer, diolefin monomer (if used) and the catalyst system are continuously supplied to a reaction zone and the product polymer is formed as a slurry in the liquid phase. Suitable inert hydrocarbons for use as the polymerization medium are those selected from the group comprising $C_4$-$C_8$ aliphatic hydrocarbons, $C_5$-$C_{10}$ cyclic aliphatic hydrocarbons, $C_6$-$C_9$ aromatic hydrocarbons, $C_3$-$C_8$ monoolefinic hydrocarbons and mixtures thereof Non-limiting examples of such hydrocarbons include: (i) straight and branched chain hydrocarbons such as butane, isobutane, pentane, hexane, octane and the like; (ii) cyclic and alicyclic hydrocarbons such as cyclopentane, cyclohexane, cycloheptane, ethylcyclopentane, methylcyclohexane, methylcycloheptane and the like; (iii) alkyl-substituted aromatic hydrocarbons such as toluene, xylene and the like; and (iv) liquid olefins which may act as monomers or comonomers such as propylene, butene-1 and the like.

The choice of relative proportions of the aluminum (i.e., from the organoaluminum cocatalyst) and total vanadium (i.e., from the vandium catalyst) is within the purview of a person skilled in the art. Thus, the ratio of the molar amount of the aluminum cocatalyst(s) to the total molar amount of vanadium catalyst is preferably in the range of from about 10:1 to about 1000:1, more preferably from about 10:1 to about 60:1, most preferably from about 10:1 to about 35:1.

The present process is generally carried out at temperatures in the range of from about -40°C to about 200°C, preferably from about -20° to about 100°C, more preferably from about 0°C to about 80°C, and at a pressure in the range of from about 5 to about 700 psig.

The precise mode of carrying out the present process is not particularly restricted. In one preferred embodiment, the present process may be carried out by first introducing the hydrocarbon diluent into a stirred tank reactor together with the olefin monomer(s) and adjusting the pressure of the reactor contents so that the temperature of the reactor contents are brought to the desired level. Ethylene gas may be introduced either into the vapour phase of the reactor or sparged into the liquid phase as is known in the art. Thereafter, a hydrocarbon solution of the vanadium compound containing a desired amount of the activator and a hydrocarbon solution of the aluminum cocatalyst(s) in the desired ratios are introduced in the liquid phase. The polymerization occurs substantially in the liquid phase, a slurry of the product polymer being formed in the diluent. The rate of polymerization may be controlled by the rate of catalyst addition. The reactor temperature and pressure may be controlled through the vaporization of the liquid phase as well as by cooling coils, jackets, etc. If a mixture of olefin monomers is used, the content of any one monomer in the polymer product may be controlled by manipulating the feed rates of the respective olefin monomers to the reactor and by manipulating the concentration of catalyst fed to the reactor. The polymer product may be recovered in a conventional manner by flashing off the lower boiling compounds either at reduced pressure or by treatment of the slurry with a mixture of steam and hot water, and by the use of a devolatilizing extruder or by further steam stripping and subsequent dewatering and drying. In a preferred continuous process, the mean residence time of the catalyst and polymer in the reactor is generally from about 20 minutes to 8 hours, preferably from about 30 minutes to about 6 hours, more preferably from about 1 to about 4 hours.

The present process may be used to produce EPDM terpolymers having a desirable Mooney viscosity. Viscoelastic property measurements show that the EPDM elastomers prepared in the presence of EASC exhibit slower relaxation than those prepared with DEAC, indicating a higher degree of long chain branching with EASC

Embodiments of the invention will be illustrated with reference to the following Examples which are provided for illustrative purposes and should not be used to construe or limit the scope of the invention.

In the Examples, the weight percent ethylene in the polymer products was determined by Fourier Transform Infra Red (FTIR) spectroscopy in accordance with ASTM D-3900. Thus, polymeric films were pressed at 150°C and the spectra recorded. The ethylene content was determined by integrating the absorbance peaks at 720 $cm^{-1}$ and 1155 $cm^{-1}$, and performing the calculation using empirically derived relationships. The ENB content was measured by FTIR spectroscopy in accordance with ASTM D-6047-96. The Mooney viscosity (ML 1+4 @ 125°C) of the polymer products was determining using a Mooney viscometer in accordance with ASTM D-1646.

EXAMPLES 1-7

In these Examples a series of terpolymers of ethylene, propylene, and 5-ethylidene-2-norbornene (ENB) were produced using a catalyst system comprising: vanadium trisacetylacetonate ($V(acac)_3$) as the catalyst, and aluminum alkylhalide (diethylealuminum chloride (DEAC), ethylaluminum sesquichloride (EASC), or mixture of both) as the cocatalyst, and either ETA or DCPEE as the catalyst activator.

A continuous polymerization reaction was run in a reactor provided with agitation and fitted with an evaporative cooling device. The reactor was first charged with propylene, ENB, ethylene and hydrocarbon diluent, and the reactor contents were allowed to equilibrate at temperature of 10°C. Continuous flows of gaseous ethylene, a 1 weight percent solution of aluminum alkylhalide in cyclohexane and a 0.2 weight percent solution of $V(acac)_3$ in toluene (containing about 4:1 molar ration of activator to vanadium) were then fed to the reactor. The pressure of the reactor contents was periodically adjusted to about 71 psig in order to maintain the temperature at 10°C. The onset of the reaction usually took 10-20 minutes from the start of the addition of catalyst and cocatalyst flows. Thereafter, the reactor was put into a continuous mode of operation with continuous flows of the monomers and molecular weight modifier was also fed to the reactor.

The reactor feed recipe used in each Example was based on the molar ratio of the various components to 100 moles propylene and is set out in Table 1.

The mean residence time of the reactants was on the order of 1.5 hours. The polymer slurry was collected in a vessel containing water to which an antioxidant had been added. The polymer slurry was subsequently stripped with steam in order to remove residual hydrocarbons and the polymer product was then dried.

The polymer produced by the above process was analyzed for its composition and Mooney viscosity. The results are reported in Table 1. The tan delta curve for the polymer product was obtained at 100°C, 10% dynamic strain and a frequency range of 0.01 to 100 rad/sec. The results for the polymers produced in Examples 1, 4, 5 and 7 are illustrated in Figures 1 and 2. The polymer product was also subjected to Dynamic Stress Relaxation (DSR) measurements at 75°C. The results for the polymers produced in Examples 1, 4, 5 and 7 are shown in Figures 3 and 4.

The results in Table 1 illustrate, inter alia, that the use of DCPEE as an activator results in enhanced vanadium catalyst efficiency.

Table 1

| | Example | | | | | | |
|---|---|---|---|---|---|---|---|
| | 1 | 2 | 3 | 4 | 5 | 6 | 7 |
| Activator | ETA | ETA | ETA | ETA | DCPEE | DCPEE | DCPEE |
| Cl/Al Molar Ratio | 1.00 | 1.25 | 1.4 | 1.5 | 1.00 | 1.38 | 1.50 |
| Flow Recipe (moles/hour) | | | | | | | |
| Propylene | 100.0 | 100.0 | 100.0 | 100.0 | 100.0 | 100.0 | 100.0 |
| Diluent | 75.1 | 74.9 | 74.8 | 75.1 | 73.3 | 74.7 | 74.2 |
| Ethylene | 22.6 | 21.7 | 17.3 | 18.2 | 26.6 | 22.6 | 25.4 |
| ENB | 1.2 | 1.3 | 1.1 | 1.0 | 1.1 | 1.2 | 1.2 |
| Solvent | 7.3 | 6.9 | 6.8 | 7.8 | 6.6 | 5.2 | 7.1 |
| Catalyst | 0.0012 | 0.0014 | 0.0013 | 0.0007 | 0.0008 | 0.0008 | 0.0008 |
| Cocatalyst | 0.0169 | 0.0203 | 0.0204 | 0.0094 | 0.0122 | 0.0135 | 0.0118 |
| VE (g/g) | 2222 | 2407 | 1126 | 1111 | 3351 | 2710 | 3890 |
| Ethylene content (wt.%) | 57.8 | 58.2 | 58.2 | 57.9 | 53.5 | 56.2 | 57.4 |
| ENB content (wt.%) | 9.8 | 9.1 | 10.6 | 12.8 | 8.4 | 11.5 | 8.6 |
| Mooney | 49.0 | 56.0 | 51.0 | 52.0 | 51.0 | 50.8 | 55.3 |

## Claims

1. A process for production of an olefin polymer having long chain branching, the process comprising the step of polymerizing an olefin monomer in the presence of a catalyst system comprising: a catalyst comprising a compound containing vanadium with the proviso that the compound does not comprise a halogen directly bound to the vanadium;

   an organoaluminum cocatalyst having a halogen to aluminum molar ratio in the range of from about 1 to about 2; and
   an activator having Formula I:

   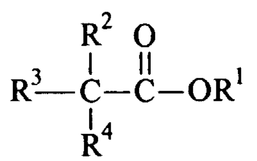

   (I)

   wherein:

   $R^1$ is selected from the group comprising a substituted or unsubstituted $C_1$-$C_{10}$ alkyl, a substituted or unsubstituted $C_5$-$C_{20}$ aryl group and a substituted or unsubstituted $C_3$-$C_{20}$ cycloalkyl group, with the proviso that the moiety -C(O)OR$^1$ may be substituted by a member selected from the group comprising a carbonic acid derivative, a keto group and a nitrile group;
   $R^2$, $R^3$ and $R^4$ may be the same or different and each is selected from one of the following groups: (a) $R^1$; (b) a halogen; and (c) hydrogen, a substituted or unsubstituted $C_1$-$C_{10}$ alkyl, a substituted or unsubstituted

$C_5$-$C_{20}$ aryl group, a substituted or unsubstituted $C_1$-$C_{10}$ alkyl oxy group, a substituted or unsubstituted $C_5$-$C_{20}$ aryl oxy group or $C(O)OR^7$, wherein $R^7$ is a $C_1$-$C_{20}$ hydrocarbon group;
with the provisos that:

(i) at least one of $R^2$, $R^3$ and $R^4$ is selected from group (b); and
(ii) in the activator of Formula I, all of the following are not satisfied:

$R^1$ is a $C_1$-$C_6$ alkyl group, $R^2$ is a $C_1$-$C_6$ alkyl group or $C_1$-$C_6$ alkoxy group, $R^3$ is chlorine, bromine or hydrogen, and $R^4$ chlorine or bromine.

**2.** The process defined in claim 1, wherein one of the following is satisfied in the compound of Formula I:

(a) each of $R^2$, $R^3$ and $R^4$ is a halogen.;
(b) each of $R^2$ and $R^3$ is a halogen, and $R^4$ is a substituted or unsubstituted $C_5$-$C_{20}$ aryl group;
(c) each of $R^2$ and $R^3$ is a halogen, and $R^4$ is $C(O)OR^7$, wherein $R^7$ is selected from the group comprising methyl, ethyl, propyl, butyl and pentyl.
(d) each of $R^2$ and $R^3$ is a substituted or unsubstituted $C_5$-$C_{20}$ aryl group, and $R^4$ is a halogen; and
(e) $R^2$ is $C(O)OR^7$, wherein $R^7$ is selected from the group comprising methyl, ethyl, propyl, butyl and pentyl, or $R^2$ is a substituted or unsubstituted $C_5$-$C_{20}$ aryl group, $R^3$ is a halogen, and $R^4$ is hydrogen.

**3.** The process defined in any one of claims 1-2, wherein the halogen comprises chlorine.

**4.** The process defined in claim 1, wherein the activator comprises dichlorophenyl acetic acid ethyl ester (DCPEE).

**5.** The process defined in any one of claims 1-4, wherein $R^1$ is selected from the group comprising methyl, ethyl and octyl.

**6.** The process defined in any one of claims 1-5, wherein the catalyst is selected from the group comprising vanadium triacetylacetonate, vanadylacetylacetonate, vanadium oxobutoxide, trialkylvanadanes, alkoxyoxovanadium-beta-diketonates, tris(2-acetylcyclohexanone) vanadium and mixtures thereof.

**7.** The process defined in any one of claims 1-6, wherein the aluminum cocatalyst comprises at least one compound having the formula:

$$(R^5)_pAlY_q$$

wherein $R^5$ is selected from the group comprising a $C_2$-$C_{10}$ alkyl group, a $C_2$-$C_{10}$ alkoxyl group and a $C_3$-$C_{20}$ cycloalkyl group, Y is a halogen and p+q is 3.

**8.** The process defined in any one of claims 1-6, wherein the aluminum cocatalyst is selected from the group comprising trimethylaluminum, triethylaluminum, diethyl aluminum hydride, triisobutyl aluminum, tridecyl aluminum, tridodecyl aluminum, diethyl aluminum methoxide, diethyl aluminum ethoxide, diethyl aluminum phenoxide, diethyl aluminum chloride, ethyl aluminum dichloride, methyl diethoxy aluminum and methyl aluminoxane.

**9.** The process defined in any one of claims 1-8, wherein the olefin monomer comprises ethylene, an $\alpha$-olefin monomer and mixtures thereof

**10.** The process defined in claim 9, wherein the olefin monomer further comprises a diolefin monomer.

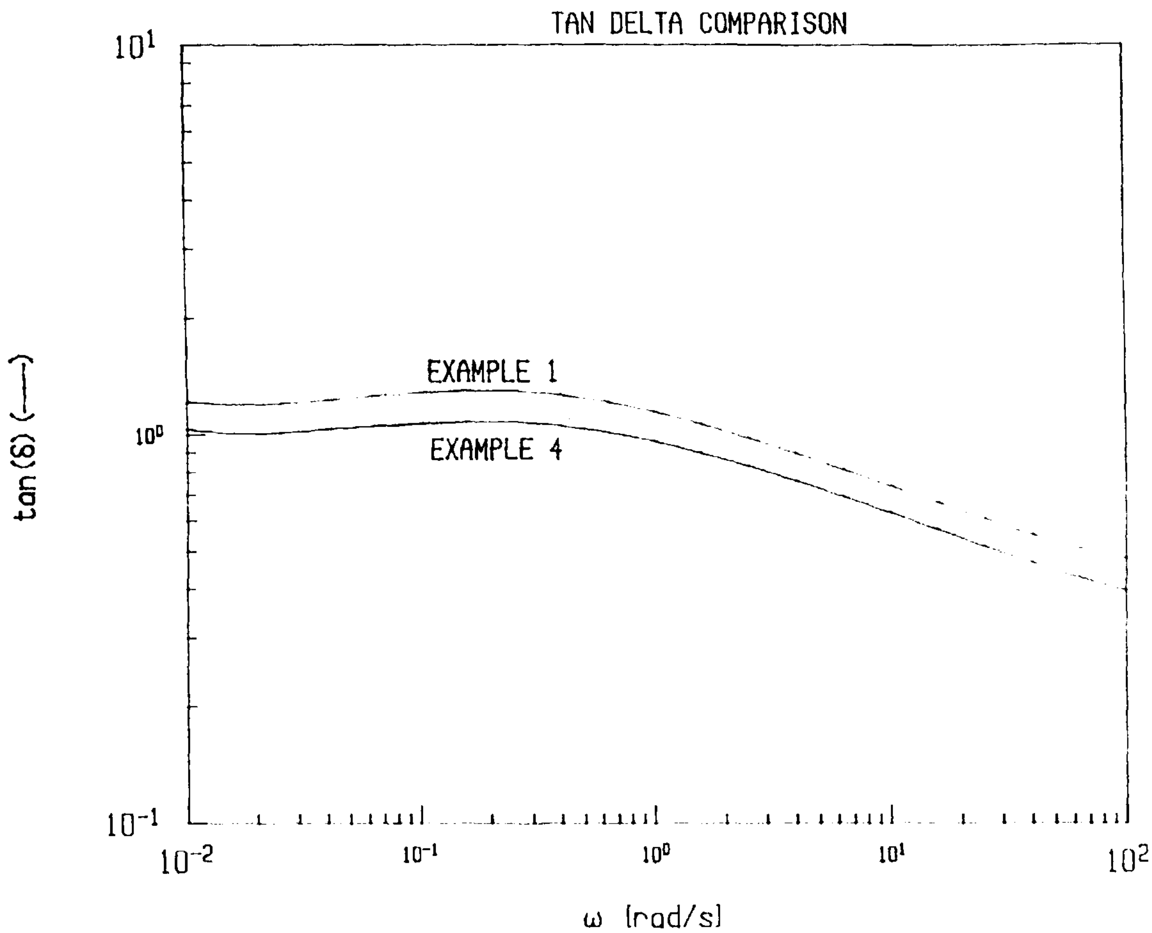
TAN DELTA COMPARISON
EXAMPLE 1
EXAMPLE 4
$10^1$
$10^0$
$10^{-1}$
tan(δ) (—)
$10^{-2}$
$10^{-1}$
$10^0$
$10^1$
$10^2$
ω [rad/s]

FIGURE 1

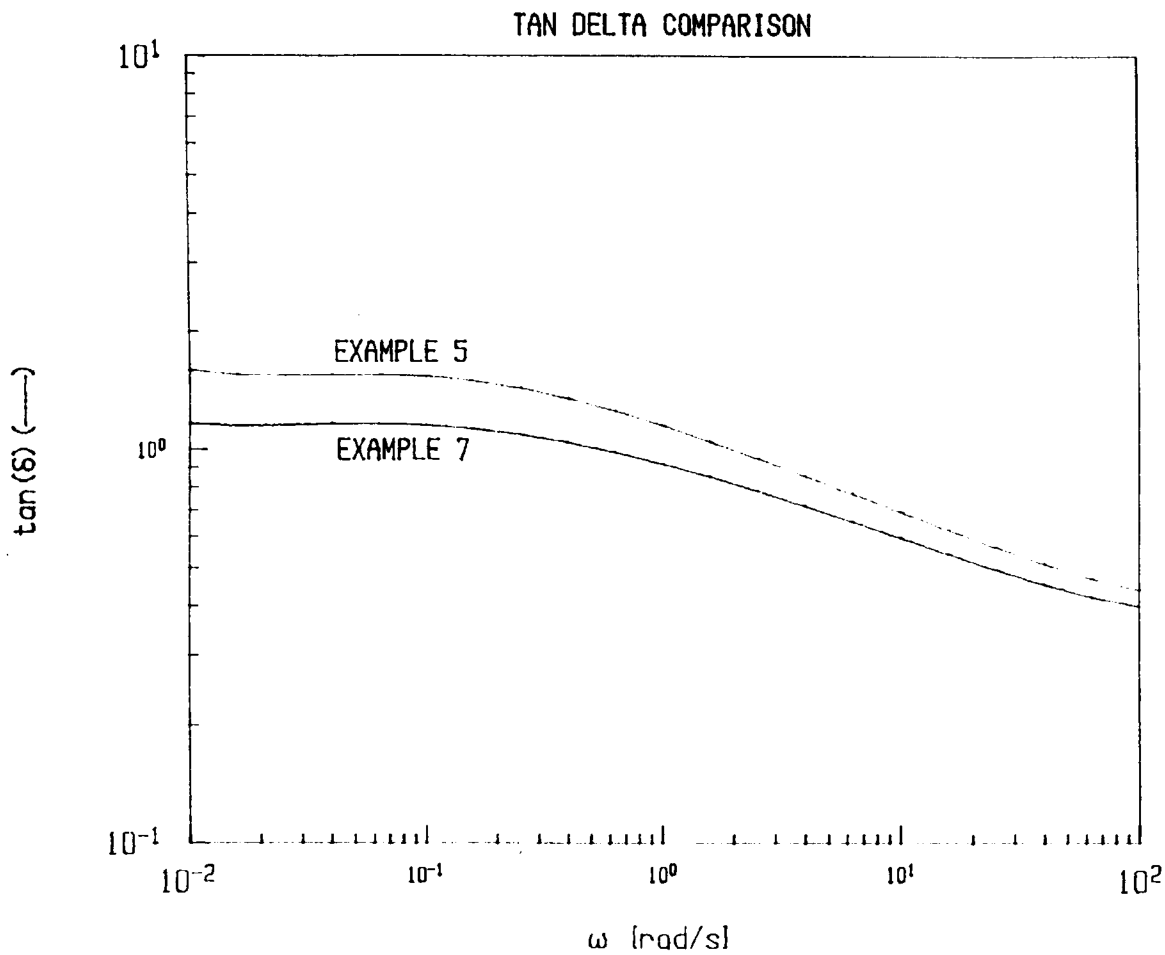
TAN DELTA COMPARISON
EXAMPLE 5
EXAMPLE 7
$10^1$
$10^0$
$10^{-1}$
tan (δ) (——)
$10^{-2}$
$10^{-1}$
$10^0$
$10^1$
$10^2$
ω [rad/s]

FIGURE 2

Figure 3: DSR- Normalized Stress Relaxation Modulus

T = 75°C

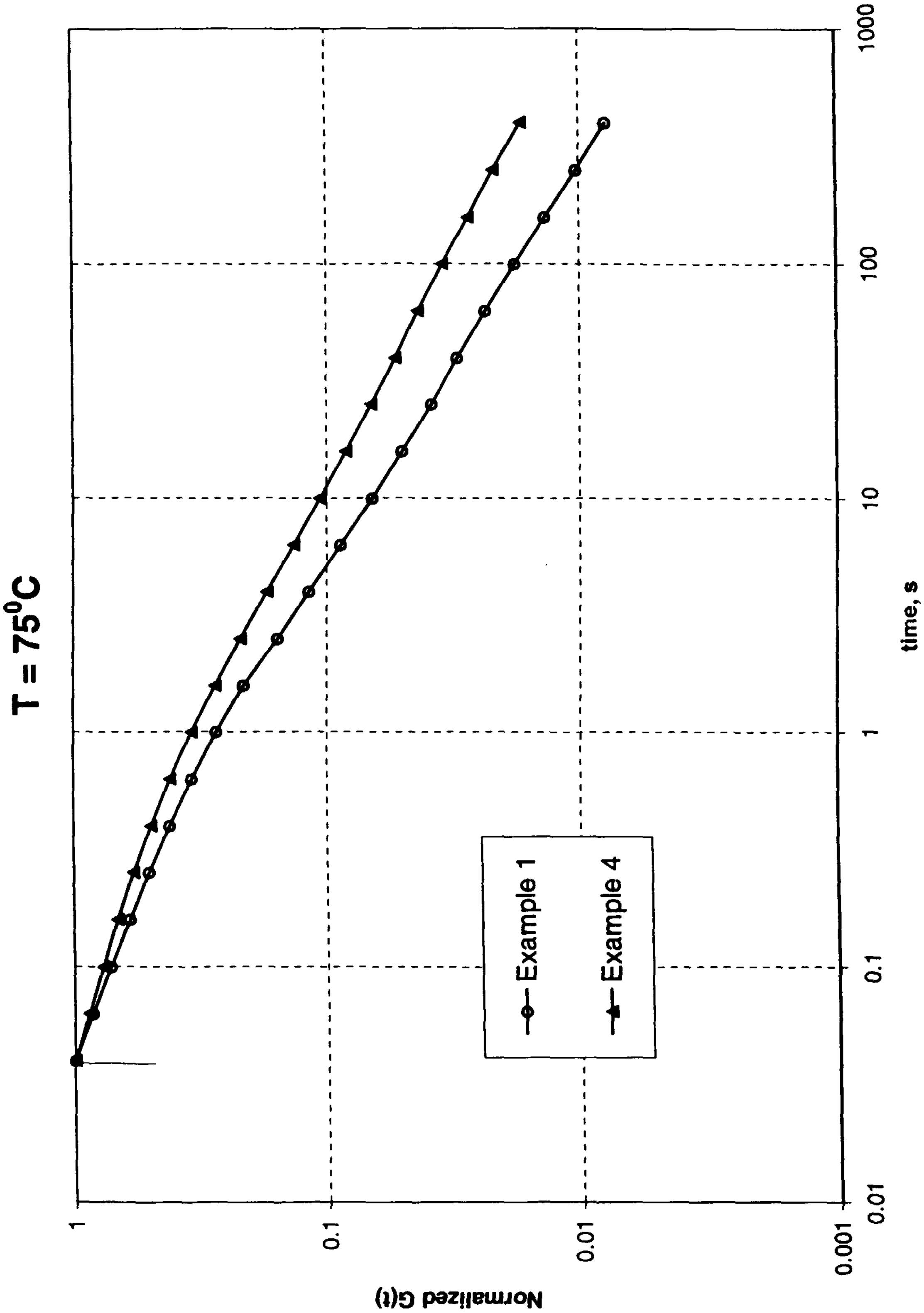

## Figure 4: DSR - Normalized stress relaxation modulus T=75°C

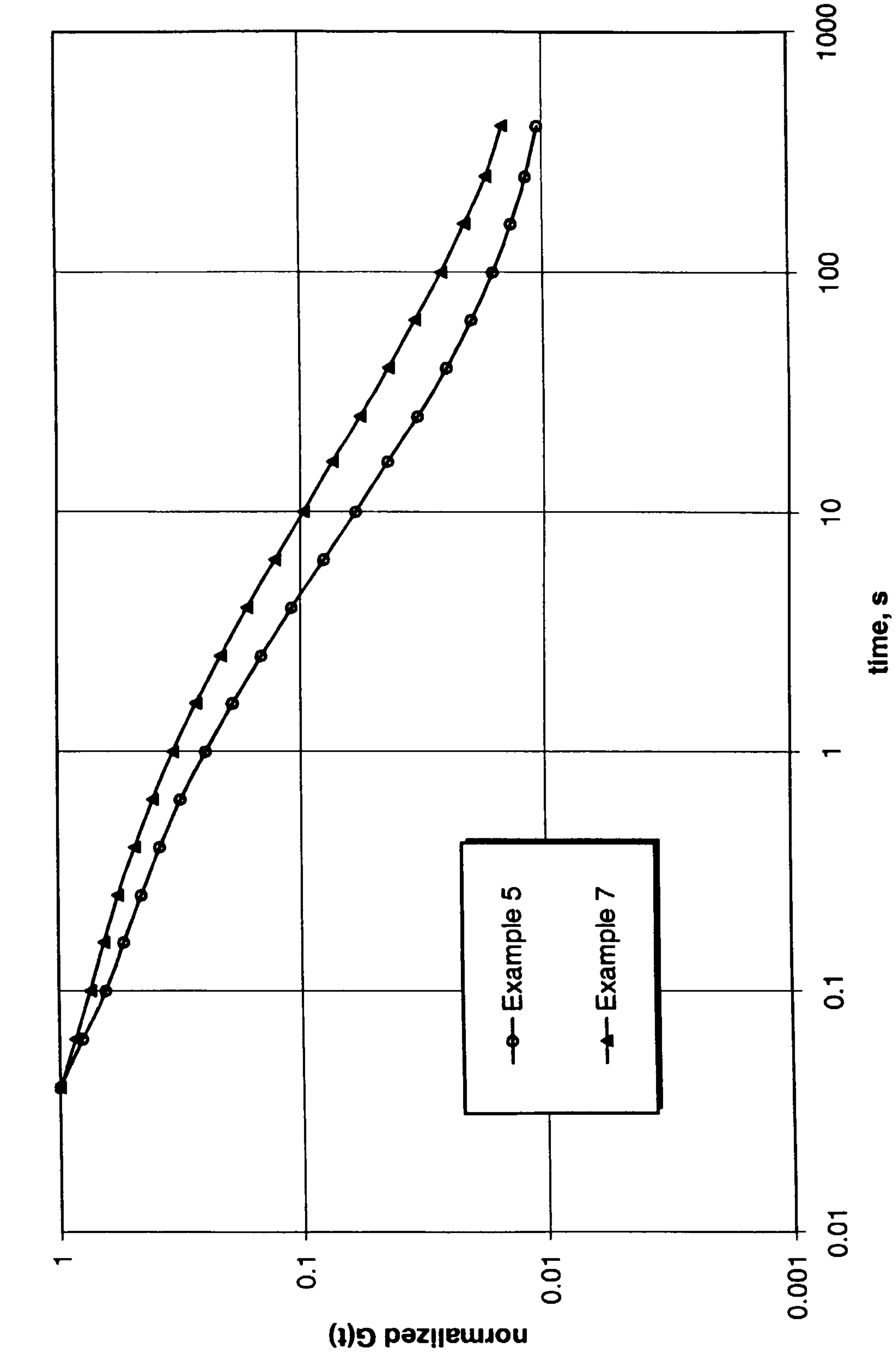

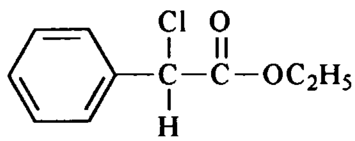
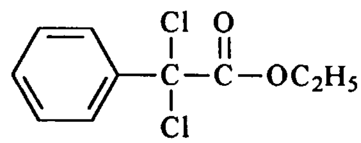
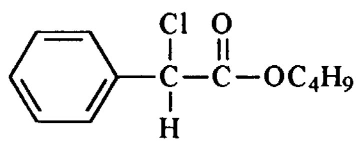
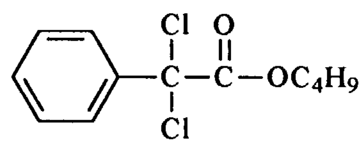
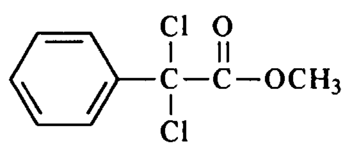
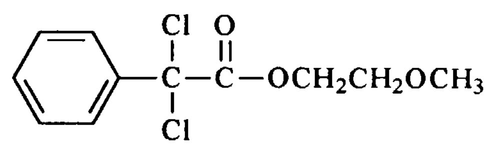
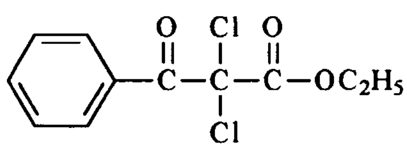
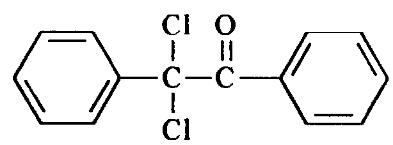
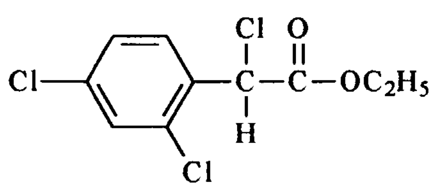
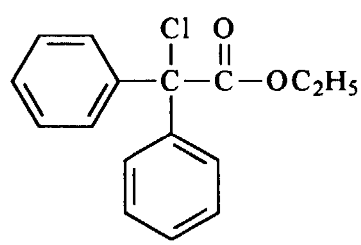
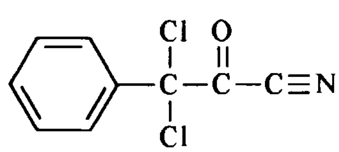
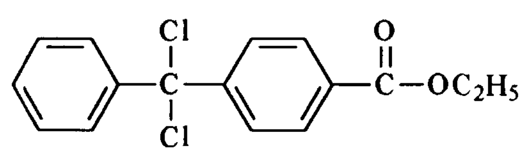

FIGURE 5

European Patent Office

# EUROPEAN SEARCH REPORT

Application Number
EP 99 11 1412

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 5 502 127 A (BAI XINLAI) 26 March 1996 (1996-03-26) * column 3, line 4 - line 10 * * examples 1-7 * | 1-3,5-10 | C08F4/68 C08F210/16 |
| X | US 5 728 911 A (HALL JAMES R) 17 March 1998 (1998-03-17) * claims 1,4,6,8 * * column 4, line 35 - line 41 * * column 5, line 15 - column 6, line 9 * * column 8, line 10 * * example 21 * | 1-10 | |
| X | EP 0 546 629 A (ENICHEM ELASTOMERS) 16 June 1993 (1993-06-16) * claims 1,6-14 * | 1-9 | |
| X | DE 23 44 267 A (MONTEDISON SPA) 14 March 1974 (1974-03-14) * examples 1,8 * | 1-3,5-10 | |

TECHNICAL FIELDS SEARCHED (Int.Cl.6)
C08F

The present search report has been drawn up for all claims

| Place of search | Date of completion of the search | Examiner |
|---|---|---|
| THE HAGUE | 4 October 1999 | Fischer, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 11 1412

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-1999

| Patent document cited in search report | Publication date | Patent family member(s) | Publication date |
|---|---|---|---|
| US 5502127 A | 26-03-1996 | NONE | |
| US 5728911 A | 17-03-1998 | AU 686637 B | 12-02-1998 |
| | | AU 6937194 A | 17-01-1995 |
| | | BR 9406903 A | 02-04-1996 |
| | | CA 2165675 A | 05-01-1995 |
| | | CN 1125954 A,B | 03-07-1996 |
| | | DE 69404149 D | 14-08-1997 |
| | | DE 69404149 T | 05-02-1998 |
| | | EP 0705284 A | 10-04-1996 |
| | | JP 9502464 T | 11-03-1997 |
| | | WO 9500564 A | 05-01-1995 |
| EP 0546629 A | 16-06-1993 | IT 1252183 B | 05-06-1995 |
| | | AT 149185 T | 15-03-1997 |
| | | CA 2084910 A | 11-06-1993 |
| | | DE 69217624 D | 03-04-1997 |
| | | DE 69217624 T | 31-07-1997 |
| | | JP 6100627 A | 12-04-1994 |
| | | RU 2095376 C | 10-11-1997 |
| DE 2344267 A | 14-03-1974 | CA 1014299 A | 19-07-1977 |
| | | IT 967145 B | 28-02-1974 |
| | | BE 804430 A | 04-03-1974 |
| | | FR 2197899 A | 29-03-1974 |
| | | GB 1396631 A | 04-06-1975 |
| | | JP 49066787 A | 28-06-1974 |
| | | NL 7312058 A | 07-03-1977 |
| | | ES 418460 A | 01-04-1976 |

EPO FORM P0459

For more details about this annex : see Official Journal of the European Patent Office, No. 12/82